# EUROPÄISCHE PATENTSCHRIFT

(11) **EP 2 878 393 B1**
(45) Veröffentlichungstag und Bekanntmachung des Hinweises auf die Patenterteilung: **11.01.2017**
(21) Anmeldenummer: 13194680.8
(22) Anmeldetag: 27.11.2013
(51) Int. Cl.: B21D 28/04, B21D 43/10, B21D 28/26, G01B 11/02

(54) **Verfahren zum Erfassen einer Außenabmessung eines plattenförmigen Werkstücks**
Method for the detection of the outside dimensions of a platelike workpiece
Procédé d'enregistrement d'une dimension extérieure d'une pièce en forme de plaque

(43) Veröffentlichungstag der Anmeldung: 03.06.2015
(73) Patentinhaber: TRUMPF Werkzeugmaschinen GmbH + Co. KG, 71254 Ditzingen (DE)
(72) Erfinder: Kerscher, Stefan, 75045 Walzbachtal (DE)
(74) Vertreter: Prüfer & Partner mbB Patentanwälte · Rechtsanwälte

(56) Entgegenhaltungen:
- EP-A1- 1 970 667
- JP-A- S61 155 803
- JP-A- 2006 030 010
- US-A- 5 721 587

## Beschreibung

Die Erfindung betrifft ein Verfahren zum Erfassen einer Außenabmessung eines plattenförmigen Werkstücks, insbesondere zum Erfassen der Außenabmessung eines auf einer Bearbeitungsmaschine zu bearbeitenden plattenförmigen Werkstücks.

Es sind Vorrichtungen zum Erfassen der Außenabmessung bekannt, die, beispielsweise in JP 2002-172 440 A, für das Zuführen eines Plattenmaterials eine Zuführeinrichtung mit verstellbaren Greifern verwenden und eine Außenabmessung des Plattenmaterials über den Abstand der Greifer bestimmen. Andere Vorrichtungen nutzen beispielsweise bewegliche Pratzen der Stanzmaschine, um damit mittels taktiler Anschläge die Außenabmessung zu bestimmen.

Bei der Verwendung dieser Vorrichtungen erfolgt jedoch ein Erfassen der Außenabmessung des Plattenmaterials mit mechanischen Sensoren, die einem Verschleiß unterliegen, und bei denen die Gefahr eines Bruchs besteht. Wenn das Erfassen der Abmessungen in einer Zuführeinrichtung erfolgt, kann dadurch außerdem nicht ermittelt werden, ob das Werkstück in der Bearbeitungsmaschine richtig positioniert ist.

Dokument EP 1 970 667 A1 offenbart ein Verfahren, bei dem aus Blechen ausgestanzte Konturen mittels eines Laserstrahls überprüft werden. Ein Steuerungsrechner erkennt, ob ein von einer Sendeeinheit auf das Blech gerichteter Detektionsstrahl während einer Bewegung des Blechs von einer Empfangseinheit empfangen wird, oder nicht, und erfasst somit über eine Zustandsänderung eine Kante an der ausgestanzten Kontur und deren Position. Eine weitere Kante an der ausgestanzten Kontur und deren Position wird durch Fortsetzen der Bewegung mit demselben Prinzip erkannt. Aus den Positionen wird die Abmessung der Ausstanzung bestimmt.

Der Erfindung liegt die Aufgabe zugrunde, ein Verfahren bereitzustellen, mit dem eine Außenabmessung eines Werkstücks prozesssicher und verschleißfrei erfasst werden kann und außerdem eine Bestimmung einer Position des Werkstücks in der Stanzmaschine möglich ist.

Die Aufgabe wird durch ein Verfahren gemäß Anspruch 1 gelöst. Vorteilhafte Weiterentwicklungen sind Gegenstand der abhängigen Ansprüche.

Durch Bewegen eines Werkstücks und Erfassen einer ersten Position des Werkstücks, in der eine erste Werkstückkante mittels eines berührungslos-wirkenden Sensors an einer Position relativ zu dem Sensor erfasst wird, einem weiteren Bewegen des Werkstücks und Erfassen einer zweiten Position des Werkstücks, in der eine zweite Werkstückkante mittels des Sensors an der Position relativ zu dem Sensor erfasst wird, können Außenabmessung sowie Position des Werkstücks verschleißfrei erfasst werden. Dabei kann überprüft werden, ob eine Charge mit Werkstücken mit geeigneten Abmessungen für einen Bearbeitungsauftrag bereitgestellt ist, oder ob beispielsweise ein Restblech eines vorherigen Auftrags eine ausreichende Größe für einen folgenden Auftrag aufweist. Darüber hinaus kann eine Position des Werkstücks in der Bearbeitungsmaschine erkannt werden und es können Totbereichsverletzungen verhindert werden.

Die Erfindung wird anhand von Ausführungsbeispielen erläutert.

### Insbesondere zeigen

- Fig. 1: eine Bearbeitungsmaschine mit einem Sensor, mit der das erfindungsgemäße Verfahren ausgeführt werden kann;
- Fig. 2: schematische Ansichten von verschiedenen Situationen in dem Verfahren; und
- Fig. 3: eine Draufsicht auf ein Werkstück, dessen Außenabmessungen erfasst werden.

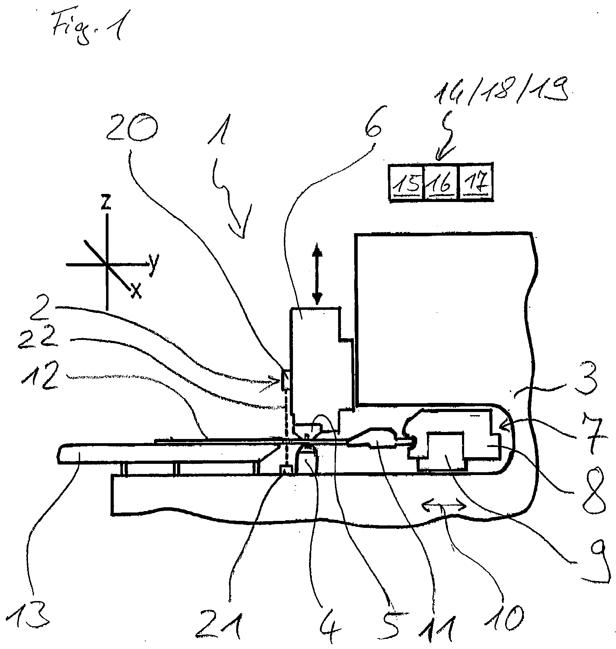

In Fig. 1 ist eine Stanzmaschine 1 mit einem Sensor 2 dargestellt. Die Stanzmaschine 1 ist ein Beispiel für eine Bearbeitungsmaschine zur Bearbeitung von plattenförmigen Werkstücken, wobei der Sensor 2 alternativ auch in einer anderen Bearbeitungsmaschine, insbesondere einer Blechbearbeitungsmaschine, wie etwa einer Laserschneidmaschine, vorgesehen sein kann.

Ein Bestandteil der Stanzmaschine 1 ist hier ein C-Rahmen 3. Der C-Rahmen 3 besteht aus einer torsionssteifen Schweißkonstruktion aus Stahl. Der C-Rahmen 3 kann aber auch in einer anderen Form ausgeführt sein.

Die Stanzmaschine 1 weist eine untere Werkzeugaufnahme 4 und eine obere Werkzeugaufnahme 5 auf. Die untere Werkzeugaufnahme 4 ist auf der unteren Innenseite des C-Rahmens 3 zum Aufnehmen eines Werkzeugunterteils vorgesehen. Die obere Werkzeugaufnahme 5 ist oberhalb der unteren Werkzeugaufnahme 4 in einer bewegbaren Presseinrichtung 6 vorgesehen und nimmt ein Werkzeugoberteil auf.

Eine Bewegungseinrichtung in Form einer herkömmlichen Koordinatenführung 7 ist in einem Rachenraum des C-Rahmens 3 vorgesehen. Ein Schlitten 8 der Koordinatenführung 7 ist entlang einer Führungsschiene 9 senkrecht zu der Zeichenebene von Fig. 1 in einer X-Richtung verfahrbar. Gemeinsam mit der Führungsschiene 9 kann der Schlitten 8 auf der unteren Innenseite des C-Rahmens 3 in Richtung eines Doppelpfeils 10 in einer Y-Richtung bewegt werden.

Auf seiner Vorderseite ist der Schlitten 8 der Koordinatenführung 7 mit mehreren Spannpratzen 11 versehen, von denen in Fig. 1 nur eine zu sehen ist. Die Spannpratzen 11 klemmen in gewohnter Weise den Rand eines mittels der Stanzmaschine 1 zu bearbeitenden plattenförmigen Werkstücks 12. Das Werkstück 12 liegt ferner auf einer auf der unteren Innenseite des C-Rahmens 3 vorgesehenen Blechauflage 13 auf. Aufgrund der beschriebenen Beweglichkeit des Schlittens 8 der Koordinatenführung 7 lässt sich das Werkstück 12 in einer horizontalen Richtung bewegen.

Die Stanzmaschine 1 weist einen Steuerungsrechner 14 auf, der u.a. eine Auswerteeinrichtung 15, eine Bewegungssteuerung 16 und eine Pressensteuerung 17 aufweist. Der Steuerungsrechner 14 ist mit einer Eingabeeinheit 18 zum Eingeben von Bearbeitungsparametern und ähnlichem und mit einer Anzeigevorrichtung 19 zum Anzeigen von Angaben über den Betriebszustand der Stanzmaschine 1 versehen. Bei alternativen Ausführungsformen, beispielsweise bei elektrischen Stanzmaschinen, ist keine Pressensteuerung 17 vorgesehen und ihre Funktion ist in die Bewegungssteuerung 16 integriert.

Antriebe (nicht gezeigt) der Koordinatenführung 7 werden von der Bewegungssteuerung 16 gesteuert und eine Bewegung der Presseinrichtung 6 wird durch die Pressensteuerung 17 gesteuert. Bearbeitungsprogramme und Betriebsparameter sind in einem Speicherbereich des Steuerungsrechners 14 abgespeichert.

Die Stanzmaschine 1 weist ferner den Sensor 2 zum Erfassen einer Außenabmessung des Werkstücks 12 auf. Der Sensor 2 ist als Lichtschranke mit einem Sender 20 und einem separaten Empfänger 21 ausgebildet. Ein Lichtstrahl 22 (hier ein Laserstrahl) wird von dem Sender 20 ausgesendet und von dem Empfänger 21 empfangen. Durch das Empfangen oder Nicht-Empfangen des Lichtstrahls 22 wird eine Abwesenheit des Werkstücks 12 oder eine Anwesenheit des Werkstücks 12 an einer vorbestimmten Position relativ zu dem Sensor 2 erfasst. Somit wird auch eine Zustandsänderung von der Abwesenheit zu der Anwesenheit und von der Anwesenheit zu der Abwesenheit an der vorbestimmten Position, hier zwischen dem Sender 20 und dem Empfänger 21 in dem Lichtstrahl 22, erfasst. Alternativ können auch andere berührungslos-wirkende Sensoren, wie z.B. eine Lichtschranke bei der der Lichtstrahl 22 mittels eines Reflektors reflektiert wird, so dass der Sender und der Empfänger integral aufgebaut sein können, verwendet werden. Weitere alternative Möglichkeiten sind pneumatisch-wirkende Sensoren, bei denen über einen Staudruck von ausströmender Luft die An-/Abwesenheit des Werkstücks erfasst wird. Weiterhin sind alternativ kapazitive Sensoren oder bei ferromagnetischen Werkstücken induktive Näherungsschalter möglich.

Der Sender 20 ist an der Presseinrichtung 6 angebracht und der Empfänger 21 ist auf der unteren Innenseite des C-Rahmens 2 platziert, wobei die Anordnung alternativ auch umgekehrt sein kann. In einer weiteren Alternative kann der Sensor 2 auch an einer anderen geeigneten Stelle in der Stanzmaschine 1 angeordnet sein. Der Sensor 2 ist mit der Auswerteeinrichtung 15 verbunden.

Im Betrieb wird nach dem Einlegen des Werkstücks 12 in die Stanzmaschine 1 und dem Klemmen durch die Spannpratzen 11 der Sensor 2 aktiviert. Dabei wird entweder die Anwesenheit oder die Abwesenheit des Werkstücks 12 an der vorbestimmten Position relativ zu dem Sensor 2 (hier in dem Lichtstrahl 22) erfasst.

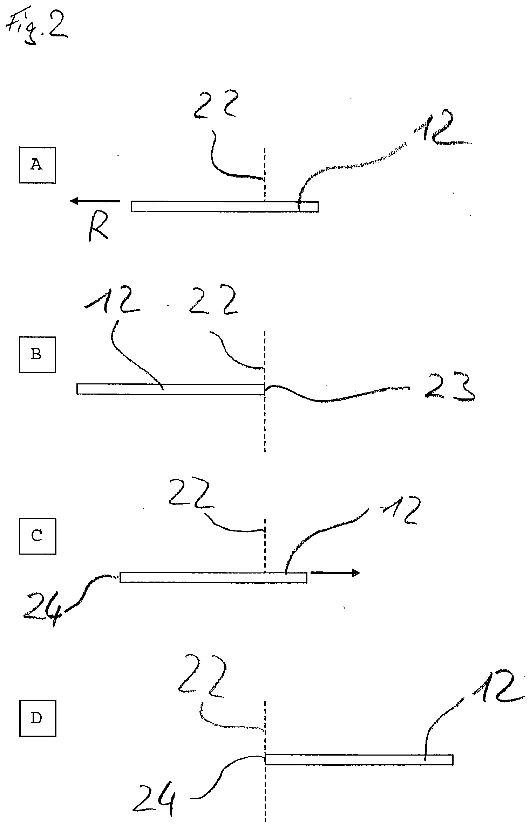

Wie in Fig. 2 in Ansicht A schematisch gezeigt, wird anschließend das Werkstück 12 mittels der Bewegungseinrichtung der Stanzmaschine 1 in eine erste vorbestimmte Richtung R bewegt. Die erste vorbestimmte Richtung ist abhängig von derzeitigen Position der Koordinatenführung 7 und ist so vorbestimmt, dass eine Kante des an der Koordinatenführung 7 angebrachten Werkstücks 12 in einen Erfassungsbereich des Sensors 2 kommt. In der Ansicht A wird eine Anwesenheit des Werkstücks 12 erfasst, da der Lichtstrahl 22 unterbrochen ist.

Das Werkstück 12 wird dann solange in die erste vorbestimmte Richtung bewegt, bis, wie in Ansicht B gezeigt, eine erste Zustandsänderung, hier eine Zustandsänderung von einer Anwesenheit des Werkstücks 12 zu einer Abwesenheit, erfasst wird, da der Lichtstrahl 22 nicht mehr unterbrochen wird. Dadurch wird eine erste Werkstückkante 23 erfasst. Dabei wird, ggf. durch mehrfaches Hin- und Herfahren in der ersten vorbestimmten Richtung R an dieser Position zum Erhöhen der Genauigkeit, über die Position der Koordinatenführung 7 eine erste Position des Werkstücks 12 erfasst und an die Auswerteeinrichtung 15 gegeben. Durch ein horizontales Bewegen des Werkstücks 12 in einer Richtung senkrecht zu der ersten vorbestimmten Richtung R wird optional ein Winkelfehler der ersten Werkstückkante 23 erfasst.

Dann wird, wie in Ansicht C gezeigt, das Werkstück 12 mittels der Bewegungseinrichtung in eine entgegengesetzte Richtung (Pfeilrichtung in Ansicht C) zu der ersten vorbestimmten Richtung R bewegt, wenn der Sensor 2, wie in Ansicht A gezeigt, vor der ersten Zustandsänderung eine Anwesenheit des Werkstücks 12 erfasst hat. Andererseits wird das Werkstück 12 weiter in der ersten vorbestimmten Richtung R bewegt, wenn der Sensor 2 vor der ersten Zustandsänderung eine Abwesenheit des Werkstücks 12 erfasst hat. Somit ist ermöglicht, dass das unbearbeitete Werkstück 12 so bewegt wird, dass eine gegenüberliegende, zweite Werkstückkante 24 erfasst wird.

Das Werkstück 12 wird solange in diese Richtung bewegt, bis, wie in Ansicht D gezeigt, eine zweite Zustandsänderung erfasst wird, wodurch die zweite Werkstückkante 24 erfasst wird. Dabei wird, ggf. ebenfalls durch mehrfaches Hin- und Herfahren in der ersten vorbestimmten Richtung R an dieser Position zum Erhöhen der Genauigkeit, über die Position der Koordinatenführung 7 eine zweite Position des Werkstücks 12 erfasst und an die Auswerteeinrichtung 15 gegeben. Auch hier wird durch ein horizontales Bewegen des Werkstücks 12 in einer Richtung senkrecht zu der ersten vorbestimmten Richtung R optional ein Winkelfehler der zweiten Werkstückkante 24 erfasst.

Dann bestimmt die Auswerteeinrichtung 15 die Außenabmessung des Werkstücks 12 in der ersten vorbestimmten Richtung aus dem Abstand, also einer Differenz von Koordinaten, der ersten Position der Koordinatenführung 7 und der zweiten Position der Koordinatenführung 7.

Optional besteht die Möglichkeit die Abmessung auch noch in anderen Richtungen zu erfassen, um beispielsweise eine Größe des Werkstücks 12 nicht nur in einer Richtung zu erfassen, sondern die Größe und ggf. eine Lage auch in anderen Richtungen zu erfassen.

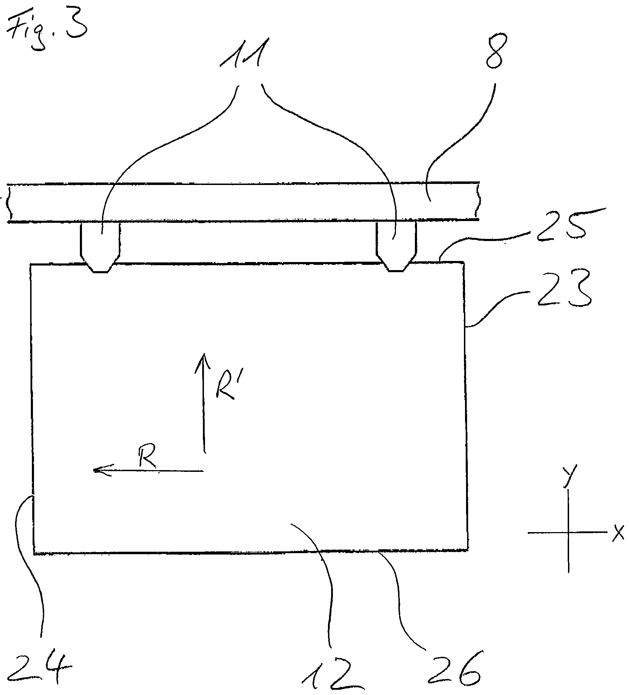

Fig. 3 zeigt schematisch das Werkstück 12, das über die Spannpratzen 11 an dem Schlitten 8 der Bewegungseinrichtung befestigt ist. Die Erfassung der Außenabmessung des Werkstücks 12 in einer zweiten vorbestimmten Richtung R' senkrecht zu der ersten Richtung R erfolgt analog zu der Erfassung der ersten Werkstückkante 23 und der zweiten Werkstückkante 24 in der ersten vorbestimmten Richtung R.

Das Werkstück 12 wird mittels der Bewegungseinrichtung in eine zweite vorbestimmte Richtung R' bewegt. Die zweite vorbestimmte Richtung R' ist abhängig von derzeitigen Position der Koordinatenführung 7 und ist so vorbestimmt, dass eine Kante des an der Koordinatenführung 7 angebrachten Werkstücks 12 in den Erfassungsbereich des Sensors 2 kommt.

Das Werkstück 12 wird dann solange in die zweite vorbestimmte Richtung R' bewegt, bis eine dritte Zustandsänderung erfasst wird. Dadurch wird eine dritte Werkstückkante 25 erfasst. Dabei wird, ggf. ebenfalls durch mehrfaches Hin- und Herfahren in der zweiten vorbestimmten Richtung R' an dieser Position zum Erhöhen der Genauigkeit, über die Position der Koordinatenführung 7 eine dritte Position des Werkstücks 12 erfasst und an die Auswerteeinrichtung 15 gegeben. Hier wird durch ein horizontales Bewegen des Werkstücks 12 in einer Richtung senkrecht zu der zweiten vorbestimmten Richtung R' optional ein Winkelfehler der dritten Werkstückkante 25 erfasst.

Dann wird das Werkstück 12 wiederum mittels der Bewegungseinrichtung in eine entgegengesetzte Richtung zu der zweiten vorbestimmten Richtung R' bewegt. Somit wird ermöglicht, dass das unbearbeitete Werkstück 12 so bewegt wird, dass eine gegenüberliegende, vierte Werkstückkante 26 erfasst wird.

Das Werkstück 12 wird solange in diese Richtung bewegt, bis eine vierte Zustandsänderung erfasst wird, wodurch die vierte Werkstückkante 24 erfasst wird. Dabei wird, ggf. ebenfalls durch mehrfaches Hin- und Herfahren in der zweiten vorbestimmten Richtung R' an dieser Position zum Erhöhen der Genauigkeit, über die Position der Koordinatenführung 7 eine vierte Position des Werkstücks 12 erfasst und an die Auswerteeinrichtung 15 gegeben. Hier wird durch ein horizontales Bewegen des Werkstücks 12 in einer Richtung senkrecht zu der zweiten vorbestimmten Richtung R' optional ein Winkelfehler der vierten Werkstückkante 24 erfasst.

Dann bestimmt die Auswerteeinrichtung 15 die Außenabmessung des Werkstücks 12 in der zweiten vorbestimmten Richtung aus dem Abstand, also einer Differenz von Koordinaten, der dritten Position der Koordinatenführung 7 und der vierten Position der Koordinatenführung 7.

Alternativ oder optional ist noch ein Erfassen in anderen Richtungen als senkrecht zu der ersten vorbestimmten Richtungen möglich. Dies ist insbesondere vorteilhaft, wenn die Abmessungen von Werkstücken erfasst werden, die eine andere als eine rechteckige Form, beispielsweise eine sechseckige Form, haben.

Die Außenabmessungen werden insbesondere bei einem ersten Werkstück 12 eines auf der Stanzmaschine 1 abzuarbeitenden Auftrags erfasst, um sicherzustellen, dass das richtige Material für diesen Auftrag bereitgestellt ist. Alternativ kann auch ein erstes Werkstück 12 einer neuen Bereitstellungscharge für einen bereits laufenden Produktionsauftrag erfasst werden, um sicherzustellen, dass weiterhin das richtige Material bereitgestellt ist. Bei erfassten Außenabmessungen des Werkstücks 12, die nicht vorbestimmten Außenabmessungen entsprechen, wird die Bereitstellungscharge in ein Lager rückgelagert und eine andere Bereitstellungscharge mit den vorbestimmten Außenabmessungen aus dem Lager bezogen. Optional werden nach dem Erfassen der Außenabmessungen des ersten Werkstücks 12 der neuen Bereitstellungscharge die Außenabmessungen eines zweiten Werkstücks 12 oder von weiteren Werkstücken 12 erfasst, um zu bestimmen, ob lediglich die Außenabmessungen des ersten Werkstücks 12 der Bereitstellungscharge oder die Außenabmessungen weiterer oder sämtlicher Werkstücke 12 der Bereitstellungscharge nicht den vorbestimmten Außenabmessungen entsprechen. Sofern keine Werkstücke, deren Außenabmessungen den vorbestimmten Außenabmessungen entsprechen, zur Verfügung stehen, wird gegebenenfalls der abzuarbeitende Auftrag übersprungen und ein nächster Auftrag bearbeitet, so dass die Stanzmaschine 1 fortlaufend produziert.

Optional vergleicht die Auswerteeinrichtung 15 die durch die Auswerteeinrichtung 15 bestimmte Außenabmessung mit der vorbestimmten Außenabmessung und verhindert eine Bearbeitung des Werkstücks 12, wenn eine Differenz zwischen der durch die Auswerteeinheit 15 bestimmten Abmessung und der vorbestimmten Abmessung größer als ein vorbestimmter Differenzwert ist. Optional erfolgt dann eine Anzeige, dass die Differenz größer als der vorbestimmte Differenzwert ist, auf der Anzeigevorrichtung 19. Der vorbestimmte Differenzwert wird manuell an der Eingabeeinheit 18 in den Steuerungsrechner 14 eingegeben. Alternativ ist der Steuerungsrechner 14 mit einer Datenverarbeitungseinrichtung außerhalb der Bearbeitungsmaschine 1 verbunden, und der vorbestimmte Differenzwert wird über ein Produktionsplanungsprogramm in den Steuerungsrechner 14 eingegeben.

Durch das Produktionsplanungsprogramm werden, bezogen auf die Außenabmessungen des Werkstücks 12, Totbereiche festgelegt. Die Totbereiche sind Bereiche auf dem Werkstück 12, die bezüglich des Werkstücks 12 festgelegt werden, in denen keine Bearbeitung stattfinden darf und in die das Werkzeug nicht eingefahren werden darf. Diese Bereiche sind beispielsweise Klemmstellen der Spannpratzen 11 und Gebiete um die Spannpratzen 11 herum. Diese Bereiche sind von der Bearbeitung ausgeschlossen, da ansonsten eine Kollision eines Werkzeugs mit den Spannpratzen 11 auftreten kann und das Werkzeug oder die Stanzmaschine 1 beschädigt werden kann. Wenn ein Werkstück 12 mit Außenabmessungen, die nicht den vorbestimmten Außenabmessungen entsprechen, in der Stanzmaschine 1 aufgenommen wird, stimmen die tatsächlichen Totbereiche nicht mit den festgelegten Totbereichen überein. Dadurch besteht die Gefahr einer Totbereichsverletzung, bei der das Werkstück 12 in einen der Totbereiche eingefahren wird. Dies verursacht eine Beschädigung des Werkzeugs oder der Stanzmaschine. Optional weist die Stanzmaschine 1 daher eine Totbereichsüberwachungseinrichtung auf, beispielsweise einen Sensor, oder die tatsächlichen Totbereiche sind in dem Steuerungsrechner 14 hinterlegt, und die Stanzmaschine 1 wird auf Grund einer Totbereichsverletzung angehalten.

Neben dem Bestimmen der Größe des Werkstücks 12 ist optional auch ein Bestimmen der Lage des Werkstücks 12 in der Stanzmaschine 1 möglich.

Zum Bearbeiten des Werkstücks fährt, wenn der vorbestimmte Differenzwert nicht überschritten ist, der Schlitten 8 der Koordinatenführung 7, an dem über die Spannpratzen 11 das Werkstück 12 gehalten wird, in einer X-Richtung zum Stanzen in eine programmierte Position und die Führungsschiene 9 fährt in Y-Richtung in die programmierte Position, wobei das Werkstück 12 über die Blechauflage 13 gleitet. Dann wird von der Presseinrichtung 6 ein Stanzhub durchgeführt. Im Anschluss daran wird nach demselben Prinzip die nächste Stanz- oder Bearbeitungsposition angefahren.

## Patentansprüche

1. Verfahren zum Erfassen einer Außenabmessung eines auf einer Bearbeitungsmaschine (1) zu bearbeitenden plattenförmigen Werkstücks (12) mit einem berührungslos-wirkenden Sensor (2), wobei der Sensor (2) mit einer Auswerteeinrichtung (15) verbunden ist, und der Sensor (2) eine Anwesenheit des Werkstücks (12) und eine Abwesenheit des Werkstücks (12) sowie eine Zustandsänderung von der Anwesenheit zu der Abwesenheit oder von der Abwesenheit zu der Anwesenheit an einer vorbestimmten Position des Werkstücks (12) relativ zu dem Sensor (2) erfasst, wobei das Verfahren folgende Schritte aufweist:
- Bewegen des Werkstücks (12) mittels einer Bewegungseinrichtung der Bearbeitungsmaschine (1) in Form einer Koordinatenführung (7) in eine erste vorbestimmte Richtung (R) bis der Sensor (2) eine erste Werkstückkante (23) mittels einer ersten Zustandsänderung erfasst;
**gekennzeichnet durch** folgende Schritte:
- Erfassen einer ersten Position des Werkstücks (12), in der die erste Zustandsänderung erfolgt, mittels der Auswerteeinrichtung (15);
- Mehrfaches Hin- und Herfahren in der ersten vorbestimmten Richtung (R) an der ersten Position des Werkstücks (12) zum Erhöhen der Genauigkeit und Erfassen der ersten Position des Werkstücks (12) über eine Position der Koordinatenführung (7);
- Bewegen des Werkstücks (12) mittels der Bewegungseinrichtung der Bearbeitungsmaschine (1) in eine Richtung zu einer zweiten Werkstückkante (24) bis der Sensor (2) die zweite Werkstückkante (24) mittels einer zweiten Zustandsänderung erfasst;
- Erfassen einer zweiten Position des Werkstücks (12), in der die zweite Zustandsänderung erfolgt, mittels der Auswerteeinrichtung (15);
- Mehrfaches Hin- und Herfahren in der ersten vorbestimmten Richtung zu der zweiten Werkstückkante (24) an der zweiten Position des Werkstücks (12) zum Erhöhen der Genauigkeit und Erfassen der zweiten Position des Werkstücks (12) über eine Position der Koordinatenführung (7);
- Bestimmen der ersten Außenabmessung über ein Bestimmen des Abstands zwischen der ersten Position und der zweiten Position des Werkstücks (12).

2. Verfahren gemäß Anspruch 1, wobei das Bewegen zu der zweiten Werkstückkante (24) in der ersten vorbestimmten Richtung (R) erfolgt, wenn der Sensor (2) vor der ersten Zustandsänderung eine Abwesenheit des Werkstücks (12) erfasst hat, und entgegengesetzt zu der ersten vorbestimmten Richtung erfolgt, wenn der Sensor (2) vor der ersten Zustandsänderung eine Anwesenheit des Werkstücks (12) erfasst hat.

3. Verfahren gemäß Anspruch 1 oder 2, wobei der Sensor (2) die Werkstückkante (23, 24, 25, 26) mittels einer Lichtschranke mit einem Sender (22) und einem Empfänger (21) erfasst.

4. Verfahren gemäß Anspruch 1 oder 2, wobei der Sensor die Werkstückkante (23, 24, 25, 26) mittels einer Lichtschranke mit einem Sender (22), einem Empfänger (21) und einem Reflektor erfasst.

5. Verfahren gemäß Anspruch 1 oder 2, wobei der Werkstoff des Werkstücks (12) ferromagnetisch ist und der Sensor (2) ein induktiver Näherungsschalter ist.

6. Verfahren gemäß Anspruch 1 oder 2, wobei der Sensor (2) ein kapazitiver Sensor ist.

7. Verfahren gemäß Anspruch 1 oder 2, wobei der Sensor (2) ein pneumatisch wirkender Sensor ist.

8. Verfahren gemäß einem der Ansprüche 1 bis 7, wobei das Verfahren zusätzlich die folgenden Schritte aufweist:
- Bewegen des Werkstücks (12) mittels einer Bewegungseinrichtung der Bearbeitungsmaschine (1) in eine zweite vorbestimmte Richtung (R') bis der Sensor (2) eine dritte Werkstückkante (25) mittels einer dritten Zustandsänderung erfasst;
- Erfassen einer dritten Position des Werkstücks (12), in der die dritte Zustandsänderung erfolgt, mittels der Auswerteeinrichtung (15);
- Bewegen des Werkstücks (12) mittels der Bewegungseinrichtung der Bearbeitungsmaschine (1) in eine Richtung zu einer vierten Werkstückkante (24) bis der Sensor (2) die vierte Werkstückkante (26) mittels einer vierten Zustandsänderung erfasst;
- Erfassen einer vierten Position des Werkstücks (12), in der die vierte Zustandsänderung erfolgt, mittels der Auswerteeinrichtung (15);
- Bestimmen der zweiten Außenabmessung über ein Bestimmen des Abstands zwischen der dritten Position und der vierten Position des Werkstücks (12).

9. Verfahren gemäß einem der vorangehenden Ansprüche, wobei die Außenabmessung bei einem ersten Werkstück (12) eines auf der Bearbeitungsmaschine (1) abzuarbeitenden Auftrags erfasst wird.

10. Verfahren gemäß einem der Ansprüche 1 bis 7, wobei die Außenabmessung bei einem ersten Werkstück (12) einer neuen Bereitstellungscharge erfasst wird.

11. Verfahren gemäß einem der vorangehenden Ansprüche, wobei die bestimmte Außenabmessung mit einer vorbestimmten Außenabmessung verglichen wird, und wenn eine Differenz zwischen der bestimmten und der vorbestimmten Außenabmessung größer als ein vorbestimmter Differenzwert ist, eine Bearbeitung des Werkstücks (12) verhindert wird.

12. Verfahren gemäß Anspruch 11, wobei ein Anzeigen auf einer Anzeigevorrichtung (19) erfolgt, wenn die Differenz größer als der vorbestimmte Differenzwert ist.

13. Verfahren gemäß Anspruch 11 oder 12, wobei der vorbestimmte Differenzwert von einem Produktionsplanungsprogramm eingegeben wird.

14. Verwendung eines der Verfahren gemäß einem der vorangehenden Ansprüche zum Bestimmen der Größe des Werkstücks (12).

15. Verwendung eines der Verfahren gemäß einem der Ansprüche 1 bis 13 zum Bestimmen der Position des Werkstücks (12).

## Claims

1. Method for detecting an overall dimension of a plate-shaped workpiece (12) to be processed on a processing machine (1) by a non-contact sensor (2), wherein the sensor (2) is connected to an evaluation device (15), and the sensor (2) detects a presence of the workpiece (12) and an absence of the workpiece (12) and a change of state from the presence to the absence or from the absence to the presence at a predetermined position of the workpiece (12) relative to the sensor (2), wherein the method comprises following steps:
- moving the workpiece (12) by a motion device in the form of a coordinate guide (7) of the processing machine (1) in a first predetermined direction (R) until the sensor (2) detects a first workpiece edge (23) by a first change of state;
**characterized by** the following steps:
- detecting, by the evaluation device (15), a first position of the workpiece (12) associated with the first change of state;
- multiple reciprocating in the first predetermined direction (R) at the first position of the workpiece (12) for increasing the precision, and detecting the first position of the workpiece (12) by a position of the coordinate guide (7);
- moving the workpiece (12) by the motion device of the processing machine (1) in a direction towards a second workpiece edge (24) until the sensor (2) detects the second workpiece edge (24) by a second change of state;
- detecting, by the evaluation device (15), a second position of the workpiece (12) associated with the second change of state;
- multiple reciprocating in the first predetermined direction towards the second workpiece edge (24) at the second position of the workpiece (12) for increasing the precision, and detecting the second position of the workpiece (12) by a position of the coordinate guide (7);
- determining the first overall dimension by a determination of the distance between the first position and the second position of the workpiece (12).

2. Method according to claim 1, wherein the motion towards the second workpiece edge (24) is carried out in the first predetermined direction (R) when the sensor (2) detected an absence of the workpiece (12) before the first change of state, and wherein the motion is carried out opposite to the first predetermined direction when the sensor (2) detected a presence of the workpiece (12) before the first change of state.

3. Method according to claim 1 or 2, wherein the sensor (2) detects the workpiece edge (23, 24, 25, 26) by a light barrier having an emitter (22) and a receiver (21).

4. Method according to claim 1 or 2, wherein the sensor detects the workpiece edge (23, 24, 25, 26) by a light barrier having an emitter (22), a receiver (21) and a reflector.

5. Method according to claim 1 or 2, wherein the material of the workpiece (12) is ferromagnetic and the sensor (2) is an inductive proximity switch.

6. Method according to claim 1 or 2, wherein the sensor (2) is a capacitive sensor.

7. Method according to claim 1 or 2, wherein the sensor (2) is a pneumatic sensor.

8. Method according to any of the claims 1 to 7, wherein the method additionally comprises the following steps:
- moving, by a motion device of the processing machine (1), the workpiece (12) in a second predetermined direction (R') until the sensor (2) detects a third workpiece edge (25) by a third change of state;
- detecting, by the evaluation device (15), a third position of the workpiece (12) corresponding to the third change of state;
- moving the workpiece (12) by the motion device of the processing machine (1) in a direction towards a fourth workpiece edge (24) until the sensor (2) detects the fourth workpiece edge (26) by a fourth change of state;
- detecting, by the evaluation device (15), a fourth position of the workpiece (12) corresponding to the fourth change of state;
- determining the second overall dimension by a determination of the distance between the third position and the fourth position of the workpiece (12).

9. Method according to any of the preceding claims, wherein the overall dimension of a first workpiece (12) of an order to be processed on the processing machine (1) is detected.

10. Method according to any of the claims 1 to 7, wherein the overall dimension of a first workpiece (12) of a new supply batch is detected.

11. Method according to any of the preceding claims, wherein the determined overall dimension is compared to a predetermined overall dimension, and upon a difference between the determined and the predetermined overall dimension being larger than a predetermined difference value, processing of the workpiece (12) is prevented.

12. Method according to claim 11, wherein an announcement on a display device (19) happens if the difference is larger than the predetermined difference value.

13. Method according to claim 11 or 12, wherein the predetermined difference value is input by a production planning program.

14. Use of any of the methods according to any of the preceding claims for determining the size of the workpiece (12) .

15. Use of any of the methods according to any of claims 1 to 13 for determining the position of the workpiece (12).

## Revendications

1. Procédé permettant de détecter les dimensions externes d'une pièce en forme de plaque (12) destinée à être usinée sur une machine d'usinage (1) comprenant un capteur (2) agissant sans contact, ce capteur (2) étant relié à un dispositif d'évaluation (15) et détectant la présence de la pièce à usiner (12) et l'absence de la pièce à usiner (12) ainsi qu'un changement d'état de la présence à l'absence ou de l'absence à la présence au niveau d'une position prédéfinie de la pièce à usiner (12) par rapport au capteur (2), ce procédé comprenant l'étape suivante consistant à :
- déplacer la pièce à usiner (12) au moyen d'un dispositif de déplacement de la machine d'usinage (1) sous la forme d'un guidage en coordonnées (7) dans une première direction prédéfinie (R) jusqu'à ce que le capteur (2) détecte un premier bord (23) de la pièce à usiner par un premier changement d'état,
**caractérisé par** les étapes suivantes consistant à :
- détecter une première position de la pièce à usiner (12) dans laquelle se produit le premier changement d'état au moyen du dispositif d'évaluation (15),
- effectuer un déplacement en va-et-vient à plusieurs reprise dans la première direction prédéfinie (R) au niveau de la première position de la pièce à usiner (12) pour augmenter la précision et détecter la première position de la pièce à usiner (12) par la position du guidage en coordonnées (7),
- déplacer la pièce à usiner (12) au moyen du dispositif de déplacement de la machine d'usinage (1) dans une direction vers un second bord (24) de cette pièce jusqu'à ce que le capteur (2) détecte le second bord de la pièce à usiner (24) par un second changement d'état,
- détecter une seconde position de la pièce à usiner (12) dans laquelle se produit le second changement d'état au moyen du dispositif d'évaluation (15),
- effectuer un déplacement en va-et-vient à plusieurs reprise dans la première direction prédéfinie vers le second bord (24) de la pièce à usiner au niveau de la seconde position de cette pièce à usiner (12) pour augmenter la précision et détecter la seconde position de la pièce à usiner (12) par la position du guidage en coordonnées (7),
- déterminer les premières dimensions externes par détermination de la distance entre la première position et la seconde position de la pièce à usiner (12).

2. Procédé conforme à la revendication 1,
selon lequel
le déplacement vers le second bord (24) de la pièce à usiner s'effectue dans la première direction prédéfinie (R) lorsque le capteur a détecté une absence de la pièce à usiner (12) avant le premier changement d'état, et s'effectue dans la direction opposée à la première direction prédéfinie lorsque le capteur (2) a détecté la présence de la pièce à usiner (12) avant le premier changement d'état.

3. Procédé conforme à la revendication 1 ou 2,
selon lequel
le capteur (2) détecte les bords de la pièce à usiner (23, 24, 25, 26) au moyen d'une barrière optique ayant un émetteur (22) et un récepteur (21).

4. Procédé conforme à la revendication 1 ou 2,
selon lequel
le capteur détecte les bords de la pièce à usiner (23, 24, 25, 26) au moyen d'une barrière optique ayant un émetteur (22), un récepteur (21) et un réflecteur.

5. Procédé conforme à la revendication 1 ou 2,
selon lequel
le matériau de la pièce à usiner (12) est ferromagnétique et le capteur (2) est un détecteur de proximité inductif.

6. Procédé conforme à la revendication 1 ou 2,
selon lequel
le capteur (2) est un capteur capacitif.

7. Procédé conforme à la revendication 1 ou 2,
selon lequel
le capteur (2) est un capteur à action pneumatique.

8. Procédé conforme à l'une des revendications 1 à 7,
comprenant en outre les étapes suivantes consistant à :
- déplacer la pièce à usiner (12) au moyen d'un dispositif de déplacement de la machine à usiner (1) dans une seconde direction prédéfinie (R') jusqu'à ce que le capteur (2) détecte un troisième bord (25) de la pièce à usiner par un troisième changement d'état,
- détecter une troisième position de la pièce à usiner (12) dans laquelle se produit le troisième changement d'état au moyen du dispositif d'évaluation (15),
- déplacer la pièce à usiner (12) au moyen du dispositif de déplacement de la machine d'usinage (1) dans une direction vers un quatrième bord (26) de la pièce à usiner jusqu'à ce que le capteur (2) détecte le quatrième bord (26) de la pièce à usiner par un quatrième changement d'état,
- détecter une quatrième position de la pièce à usiner (12) dans laquelle se produit le quatrième changement d'état au moyen du dispositif d'évaluation (15),
- déterminer les secondes dimensions externes par détermination de la distance entre la troisième position et la quatrième position de la pièce à usiner (12).

9. Procédé conforme à l'une des revendications précédentes,
selon lequel
les dimensions externes sont détectées pour une première pièce à usiner (12) d'une commande devant être usinée sur la machine à usiner (1).

10. Procédé conforme à l'une des revendications 1 à 7,
selon lequel
les dimensions externes sont détectées pour une première pièce à usiner (12) d'une nouvelle charge de fourniture.

11. Procédé conforme à l'une des revendications précédentes,
selon lequel
les dimensions externes déterminées sont comparées à des dimensions externes prédéfinies et, lorsque la différence entre les dimensions externes déterminées et les dimensions externes prédéfinies est supérieures à une valeur prédéfinie, l'usinage de la pièce à usiner (12) est empêché.

12. Procédé conforme à la revendication 11,
selon lequel
on effectue un affichage sur un dispositif d'affichage (19) lorsque la différence est supérieure à la valeur prédéfinie.

13. Procédé conforme à l'une des revendications 11 ou 12,
selon lequel
la valeur prédéfinie de la différence est donnée par un programme de planification de production.

14. Utilisation d'un procédé conforme à l'une des revendications précédentes, pour déterminer les dimensions de la pièce à usiner (12).

15. Utilisation d'un procédé conforme à l'une des revendications 1 à 13 pour déterminer la position de la pièce à usiner (12).
